# EUROPEAN PATENT APPLICATION

(11) **EP 2 327 344 A1**
(43) Date of publication of application: **01.06.2011**
(21) Application number: 09772578.2
(22) Date of filing: 13.02.2009
(51) Int. Cl.: A47J 45/07, A47J 45/08

(54) **HEAT-PROTECTED HANDLE SUITABLE FOR A COOKING VESSEL**

(30) Priority: 03.07.2008 ES 200801432 U
(71) Applicant: Castey Dominguez, Ramon, 17003 Girona (ES)
(72) Inventor: Castey Dominguez, Ramon, 17003 Girona (ES)
(74) Representative: Torner Lasalle, Elisabet
(86) International application number: PCT/ES2009/000085
(87) International publication number: WO 2010/000889

(57) **Abstract**

The invention relates to a heat-protected handle suitable for a cooking vessel, comprising a rigid structural part (11) fixed or attached to the cooking vessel (10) and one or more heat protection elements which partially cover said structural part (11), comprising a cover (12) made from an elastic material configured to be adapted to and tightly coupled on said structural part (11) such as to cover same at least partially and in a lower region of the cover (12) said configuration provides a portion adjacent to the structural element (11) or vessel (10) which acts as a barrier between the user's fingers and said vessel.

## Description

### Field of the Invention

The present invention relates to a handle offering heat protection means suitable for the gripping parts or members of a kitchen utensil, particularly a kitchen utensil such as a casserole, a saucepan, a pot and the like.

### Prior Art

Generally metallic gripping members with an insulating material or covering included as an indispensable accessory for gripping kitchen utensils, especially the utensils like those hereinbefore indicated which are subjected to the action of an intense heat source and which could otherwise not be gripped without causing injury due to the considerable temperature which said utensils and corresponding metallic gripping parts reach, are already known. Documents EP-A-1977671 and EP-A-1704904 can be cited in this sense.

Removable silicone handles, with a wide mitten-type configuration which can be applied covering metallic gripping parts of casseroles, commercially disclosed in Spain by the company VALIRA (http://www.llardobonmercader.com/Catalogo; image 57) are also known in the prior art. These silicone handles are generally suitable for several metallic gripping or holding part shapes. However, since the mentioned removable silicone handles lack a configuration specific to the type of metallic handle they cover, they do not suitably couple thereon, there generally remaining considerable looseness.

Document GB-A-2424388 discloses another element that can be adapted on a removable gripping part comprising a laminar member with reinforcements provided to be adapted on a gripping member, surrounding it.

Documents US-A-4197611 and GB-A-2225741 describe cover-like adaptable members made from flexible silicone on a rigid core forming a gripping part of a cooking utensil.

### Brief Description of the Invention

The present invention provides an alternative solution to the one described in the last two documents, proposing a mixed handle formed by a conventional rigid core and at least one cover, and mainly providing advantages as regards improving the protection of the user's fingers with respect to the cooking utensil, heat protection conditions and adaptability of a flexible silicone part used like an enveloping cover.

According to the invention, a heat-protected handle suitable for a cooking vessel comprises in all cases a rigid structural part fixed or attached to said cooking vessel, i.e., a known gripping or holding part, and at least an external heat protection element which partially or completely covers said structural part, under the following conditions:
- the external heat protection element comprises a cover made from an elastic material, for example silicone, configured to be adapted to said structural part, such as to cover same partially or completely;
- in a lower region of the cover, considering a situation of use of the cooking vessel, the mentioned configuration provides a portion adjacent to the structural element or vessel which acts as a barrier between the user's fingers and said vessel; and
- in said structural part and/or in said cover there are surface configurations providing a stable anchoring of the cover that can be released by elastic deformation.

The mentioned rigid structural part can be integral with the said cooking vessel or comprise an element, an element superimposed on and attached to the vessel. The mentioned element can be metallic, made from bakelite or another thermosetting material or any suitable heat-stable material.

In a preferred embodiment of the invention, the mentioned flexible elastic silicone cover is soft colored silicone integrating non-slip embossed parts which can contain an inscription.

According to a first embodiment, the mentioned portion which acts as a barrier is obtained by a prolongation of the lower part of the cover, at least partially extending such that it is placed against the wall of the vessel and with at least one of said surface anchoring configurations

Alternatively, said prolongation of the lower region of the cover forms a partition offering an angle in said lower region of the cover

Generally, in a preferred version the mentioned partition is close to the wall of the vessel.

In addition, said partition offers an angle of approximately 90 degrees with respect to a projecting part of the structural part or gripping part based on the fact that this handle has a mixed constitution.

In an improved embodiment, it has been provided that the cover includes a second partition in the upper part of the cover, next to a portion adapted to be superimposed on a rib of said structural part, in an area for the connection of the structural part with the vessel.

According to another embodiment, it has been provided that said rigid structural part receives one or more portions made from thermosetting plastic material, for example bakelite, which at least partially cover the structural element. The proposed mixed handle in this case will comprise:
- the rigid core or gripping part;
- an at least partial covering obtained by superimposed parts made from thermosetting material;
- the mentioned flexible covering, for example made from silicone.

In this case the mentioned cover can be thinner since the heat insulation demands required are less and are shared with the covering based on superimposed parts made from thermosetting material. The cover can thus be more readily adapted and it also allows both its assembly on and removal from the utensil in a simpler manner.

The adaptation of the flexible elastic covering on said structural part is done by tightly coupling the cover which is formed on said structural part, generally covering it in its entirety.

According to an embodiment of this last embodiment alternative, the mentioned structural part offers a hole through which two portions made from thermosetting plastic material are connected by means of a threaded screw.

In another embodiment, the heat-protected handle that is proposed comprises a cover made from a material elastic flexible with at least one shoulder provided to be inserted in recesses configured in at least the starting portion of said structural part by elastic deformation and recovery.

The mentioned recesses are further comprised in at least one side surface of said structural part or additionally in the upper and lower face of said structural part.

As has been indicated, the cooking vessel belongs to the group comprising at least the following kitchen utensils a casserole, a saucepan or a pot.

### Brief Description of the Drawings

A preferred embodiment of a removable heat-insulating handle for a kitchen utensil according to the present invention is described below by way of non-limiting example with the aid of the attached figures in which:
- Figures 1, 2 and 4 show elevational and sectional views of a part of a kitchen utensil with a rigid gripping part or structural element implementing various embodiments of the invention;
- Figure 2 depicts a partial elevational view showing the shape of the gripping part for the embodiment shown in Figure 2;
- Figures 5 and 6 show partial elevational and sectional plan views of an other embodiment of the mixed handle or heat-protected handle of this invention;
- Figure 7 depicts a partial lower perspective view of a kitchen utensil with a section line through the cover which comprises one of the gripping portions in order to better show how said cover is adapted and retained;
- Figure 8 shows a full perspective view of a kitchen utensil incorporating handles object of the invention.

### Detailed Description of a Preferred Embodiment of the Invention

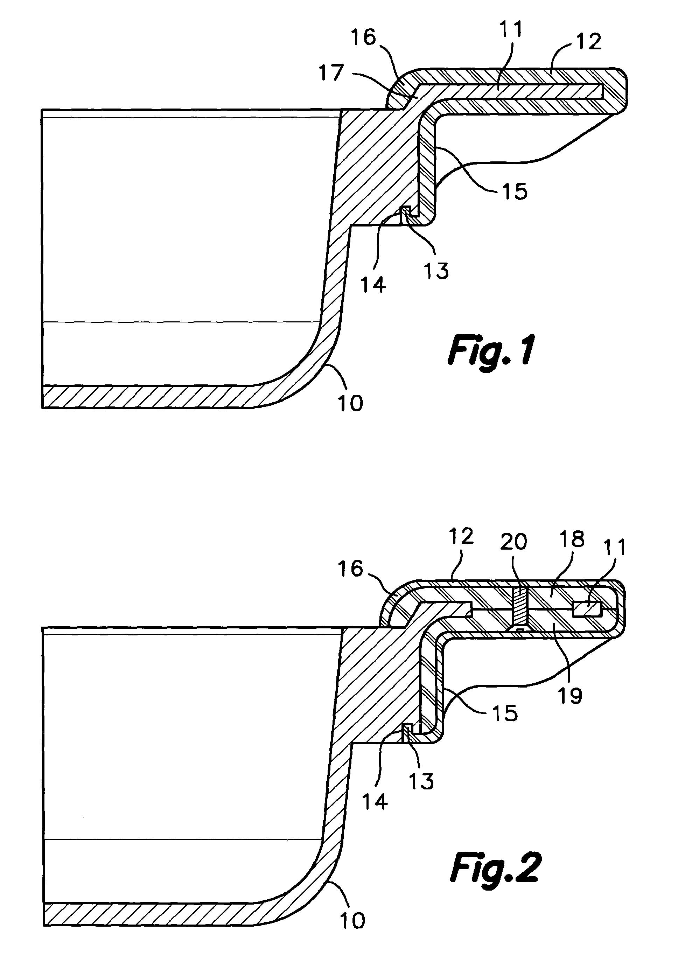

With reference to the mentioned drawings, Figure 1 shows part of a kitchen utensil, such as a casserole 10 provided with at least one gripping part, for example a metallic gripping part 11 in forma of a one-piece tab or projecting appendage, as is conventional. According to a basic embodiment of the invention it is characteristic for said part 11 to be covered by a specific heat-insulating cover 12 which specifically tightly covers, fitted like a cover or formed on its entire body 11. Said cover 12 is removable, but in order to assure its permanence on the gripping part 11, the removable cover 12 is provided with at least one hook-like shoulder 13 provided to be inserted in a respective recess or recesses 14 formed in at least a corresponding portion, such as the starting portion of the gripping part 11, for example, by means of elastic deformation and recovery. The permanence of the removable cover 12 on the gripping part 11 is thus assured unless a pulling force outwardly from the utensil is applied on the cover 12 with respect to the gripping part 11 for the purpose of separating said removable cover 12.

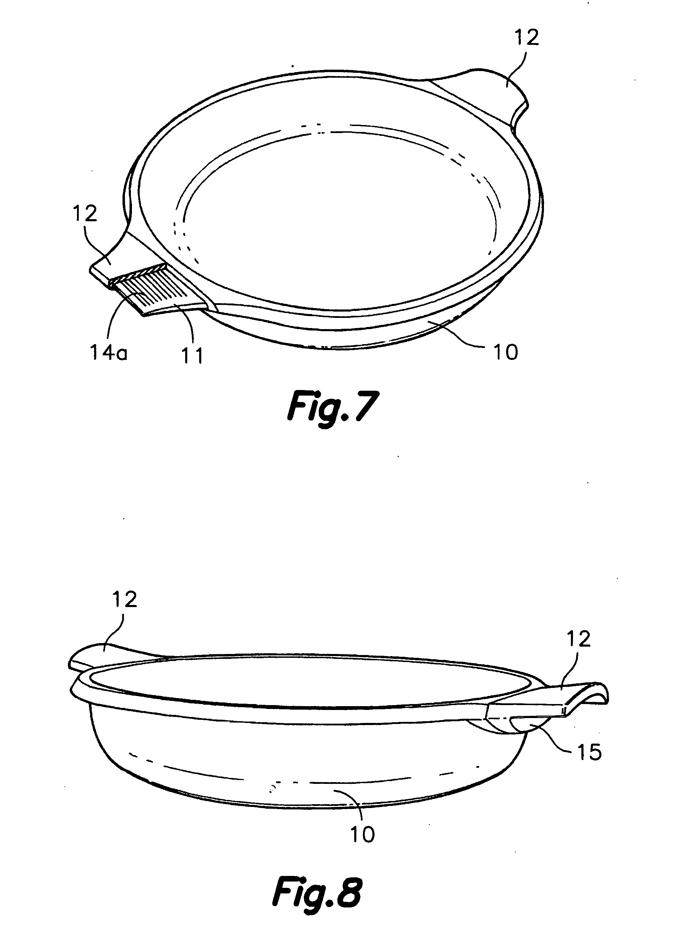

In an aspect of the invention, the mentioned recesses 14 are further present in a side surface of the metallic handle 11 as shown in Figure 7.

Additionally and according to another aspect of the invention, the mentioned recesses 14 are also comprised in the upper and lower face of said metallic handle 11, as shown in Figure 7 in which only the recesses 14 of the upper face of the metallic handle 11 can be seen, where they take on a type of grooving.

Taking into account the exposure to considerable temperatures that the kitchen utensil in question (casserole, saucepan, pot or similar) and respective gripping parts 11 on which the corresponding removable cover 12 made from heat-insulating material will be coupled will reach, said heat-insulating material is preferably silicone and more preferably soft colored silicone.

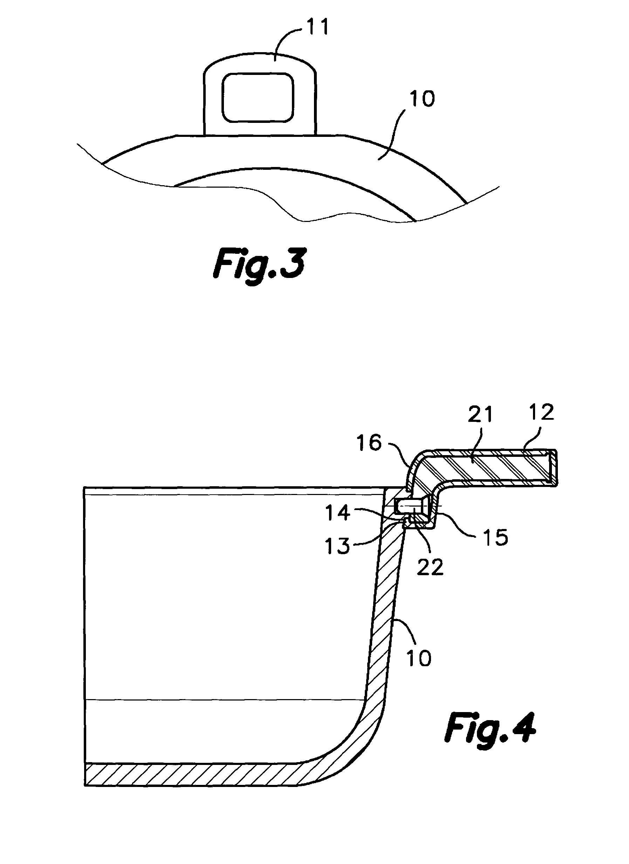

Figure 2 shows a preferred embodiment of the invention in which the mixed handle comprises parts made from thermosetting material 18, 19 on a core or gripping part 11 with a hole (see Figure 3), being attached by a screw 20 passing through the mentioned hole.

In any case, the cover made from silicone 12 offers configurations which provide a heel a heel 15 offering a protective barrier against possible contact of the user's fingers with the vessel 10. There is also at least one second partition 16 in the upper part of the cover next to a rib 17 for the connection of the structural part with the vessel in order to assure better retention of the cover 12 on the simple (Figure 1) or composite (Figure 2) structural core or gripping part.

The Figure 4 shows an embodiment in which the structural part has been obtained by a part in a thermosetting material, for example bakelite 21, fixed by means of a screw 22 to the body 10 of the vessel. A cover 12 is arranged on the structural part, said cover 12 having the same properties as the one previously explained with respect to Figures 1 and 2.

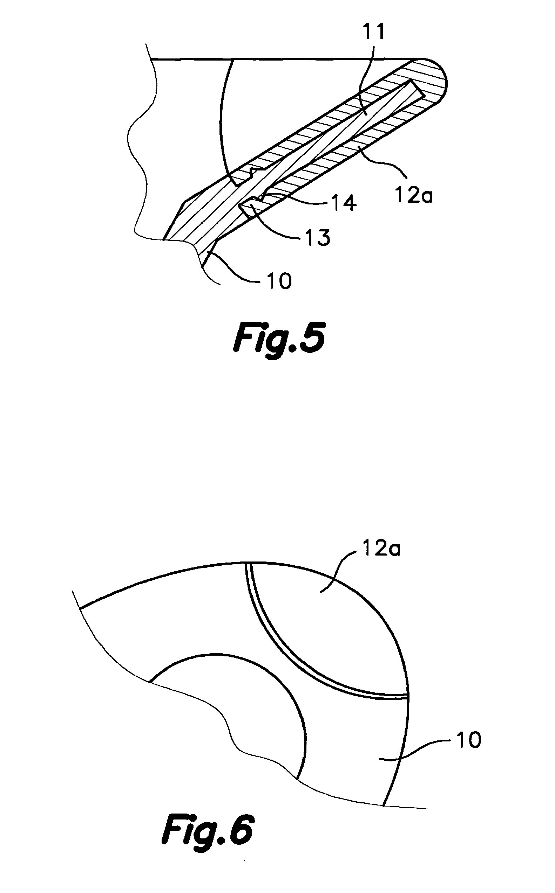

Figures 5 and 6 show an embodiment in which the gripping part has a different configuration, but also in this case the proposed mixed handle is constructed according to the same previously described principles, being provided with a part for protecting the fingers (skirting extending on the wall of the vessel) and anchoring configurations 13 and 14.

Figure 8 shows a complete kitchen utensil, specifically a casserole 10, having coupled thereto at diametrically opposed points, as is conventional, two handles with a removable cover 12 made from a heat-insulating material object of the invention.

Although the preceding description and drawings represent a preferred embodiment of the present invention, it will be understood that several additions, modifications and substitutions can be made therein without departing from the scope of the present invention as is defined in the attached claims.

## Claims

1. A heat-protected handle suitable for a cooking vessel (10), said handle being of the type comprising at least one rigid structural part (11) fixed or attached to said cooking vessel (10) and at least one external heat protection element which partially covers said structural part (11) **characterized in that**:
- said external heat protection element comprises a cover (12) made from an elastic material configured to be adapted to said structural part (11) such as to cover same at least partially;
- in a lower region of the cover (12), in a situation of use of the cooking vessel (10), said configuration provides a portion adjacent to the structural element (11) or vessel (10) which acts as a barrier between the user's fingers and said vessel; and
- in said structural part and/or in said cover there are surface configurations providing an anchoring that can be released by elastic deformation.

2. The heat-protected handle according to claim 1, **characterized in that** said portion which acts as a barrier is obtained by a prolongation of the lower part of the cover, at least partially extending such that it is placed against the wall of the vessel (10) and with at least one of said releasable surface anchoring configurations located at an end spaced from the edge of the cooking vessel (10).

3. The heat-protected handle according to claim 1, **characterized in that** said prolongation of the lower region of the cover (12) forms a partition (15) offering an angle in said lower region of the cover (12).

4. The heat-protected handle according to claim 3, **characterized in that** said partition (15) is close to the wall of the vessel.

5. The heat-protected handle according to claim 3, **characterized in that** said partition (15) offers an angle of approximately 90 degrees with respect to a projecting part of the structural part (11).

6. The heat-protected handle according to claim 1, **characterized in that** entirely covers said rigid structural part (11).

7. The heat-protected handle according to claim 3, **characterized in that** it has a second partition (16) in the upper part of the cover (12), next to a portion adapted to be superimposed on a rib (17) of said structural part (11), in an area for the connection of said structural part (11) with the vessel (10).

8. The heat-protected handle according to claim 1, **characterized in that** said rigid structural part (11) is integral with said vessel (10) or comprises an element superimposed on and attached to the vessel (10).

9. The heat-protected handle according to claim 8, **characterized in that** said rigid structural part (11) integrates one or more portions (18, 19) made from thermosetting plastic material which cover said structural element at least partially.

10. The heat-protected handle according to claim 9, **characterized in that** said structural part (11) offers a hole through which two portions (18, 19) made from thermosetting plastic material are connected by means of a threaded screw (20).

11. The heat-protected handle according to claim 1, **characterized in that** said rigid structural part(11) is made from thermosetting plastic material and is fixed to said vessel (10).

12. The heat-protected handle according to claim 1, **characterized in that** said cover (12) comprises at least one shoulder (13) provided to be inserted in recesses (14) configured in at least the starting portion of said structural part (11) by elastic deformation and recovery.

13. The heat-protected handle according to claim 12, **characterized in that** said recesses (14) are further comprised in at least one side surface of said structural part (11).

14. The heat-protected handle according to claim 12, **characterized in that** said recesses (14) are further comprised in the upper and lower face of said structural part (11).

15. The heat-protected handle according to claim 1, **characterized in that** said external heat protection element is made from silicone.

16. The heat-protected handle according to claim 15, **characterized in that** said silicone is soft colored silicone and **in that** it integrates non-slip embossed parts which can contain an inscription.

17. The heat-protected handle according to claim 1, **characterized in that** said cooking vessel (10) belongs to the group comprising the following kitchen utensils (10) a casserole, a saucepan or a pot.

18. The heat-protected handle according to claim 1, **characterized in that** said adaptation on said structural part (11) of the cover (12) is done by tightly coupling said cover (12) which is formed on said structural part (11).

## Amended claims

### Amended claims under Art. 19.1 PCT

**1.** A heat-protected handle suitable for a cooking vessel (10), said handle being of the type comprising at least one rigid structural part (11) fixed or attached to said cooking vessel (10) and at least one external heat protection element which partially covers said structural part (11) **characterized in that**:
- said external heat protection element comprises a cover (12) made from an elastic material configured to be adapted on said structural part (11) by tightly coupling said cover (12) which is formed on said structural part (11) such as to cover same at least partially;
- in a lower region of the cover (12), in a situation of use of the cooking vessel (10), said configuration provides a portion adjacent to the structural part (11) or vessel (10) which acts as a barrier between the user's fingers and said vessel; and
- in said structural part and/or in said cover there are surface configurations providing an anchoring that can be released by elastic deformation.

**2.** The heat-protected handle according to claim 1, **characterized in that** said portion which acts as a barrier is obtained by a prolongation of the lower part of the cover, at least partially extending such that it is placed against the wall of the vessel (10) and with at least one of said releasable surface anchoring configurations located at an end spaced from the edge of the cooking vessel (10).

**3.** The heat-protected handle according to claim 1, **characterized in that** said prolongation of the lower region of the cover (12) forms a partition (15) offering an angle in said lower region of the cover (12).

**4.** The heat-protected handle according to claim 3, **characterized in that** said partition (15) is close to the wall of the vessel.

**5.** The heat-protected handle according to claim 3, **characterized in that** said partition (15) offers an angle of approximately 90 degrees with respect to a projecting part of the structural part (11).

**6.** The heat-protected handle according to claim 1, **characterized in that** said cover (12) entirely covers said rigid structural part (11).

**7.** The heat-protected handle according to claim 3, **characterized in that** it has a second partition (16) in the upper part of the cover (12), next to a portion adapted to be superimposed on a rib (17) of said structural part (11), in an area for the connection of said structural part (11) with the vessel (10).

**8.** The heat-protected handle according to claim 1, **characterized in that** said rigid structural part (11) is integral with said vessel (10) or comprises an element superimposed on and attached to the vessel (10).

**9.** The heat-protected handle according to claim 8, **characterized in that** said rigid structural part (11) integrates one or more portions (18, 19) made from thermosetting plastic material which cover said structural part (11) at least partially.

**10.** The heat-protected handle according to claim 9, **characterized in that** said structural part (11) offers a hole through which two portions (18, 19) made from thermosetting plastic material are connected by means of a threaded screw (20).

**11.** The heat-protected handle according to claim 1, **characterized in that** said rigid structural part (11) is made from thermosetting plastic material and is fixed to said vessel (10).

**12.** The heat-protected handle according to claim 1, **characterized in that** said cover (12) comprises at least one shoulder (13) provided to be inserted in recesses (14) configured in at least the starting portion of said structural part (11) by elastic deformation and recovery.

**13.** The heat-protected handle according to claim 12, **characterized in that** said recesses (14) are further comprised in at least one side surface of said structural part (11)

**14.** The heat-protected handle according to claim 12, **characterized in that** said recesses (14) are further comprised in upper and lower faces of said structural part (11).

**15.** The heat-protected handle according to claim 1, **characterized in that** said external heat protection element is made from silicone.

**16.** The heat-protected handle according to claim 15, **characterized in that** said silicone is soft colored silicone and **in that** it integrates non-slip embossed parts which can contain an inscription.

**17.** The heat-protected handle according to claim 1, **characterized in that** said cooking vessel (10) belongs to the group comprising the following kitchen utensils (10) a casserole, a saucepan or a pot.
